Europäisches Patentamt

European Patent Office

Office européen des brevets

(11) Publication number: 0 269 307
A1

## EUROPEAN PATENT APPLICATION

(21) Application number: 87309923.8

(22) Date of filing: 10.11.87

(51) Int. Cl.⁴: H01R 39/58 , B60L 5/20

(30) Priority: 11.11.86 GB 8626874

(43) Date of publication of application:
01.06.88 Bulletin 88/22

(84) Designated Contracting States:
AT BE CH DE ES FR GB IT LI LU NL SE

(71) Applicant: MORGANITE ELECTRICAL CARBON
LIMITED
Clase Road Morriston
Swansea Glamorgan SA6 8PP Wales(GB)

(72) Inventor: Cumpstey, David Edward
King's View, Harlton Road
Little Eversden, Cambridgeshire(GB)
Inventor: Taylor, Peter John
18 Marshal Road
Cambridge(GB)
Inventor: Mansell, Phillip
c/o Morganite Electrical Carbon Ltd Clase
Morriston, Swansea SA6 8PP(GB)
Inventor: John, Ian
c/o Morganite Electrical Carbon Ltd Clase
Morriston, Swansea SA6 8PP(GB)

(74) Representative: Weston, Robert Dale et al
c/o PHILLIPS & LEIGH 7 Staple Inn
Holborn London WC1V 7QF(GB)

(54) Condition indicator system for wearable elements.

(57) A condition indicator system for a wearable element (2,3 or 53,54) comprising an optical fibre (11 or 59,60) attached to or within a wearable element, means (20,21 or 55,62,65) connected to one end (17 or 46) of the optical fibre to transmit a light signal therethrough, means (18,19 or 66,63,56) connected to the other end (22 or 47) of the optical fibre to detect the transmitted light signal, wherein the detector means (36) are arranged to produce an output signal contingent upon the transmitted light signal and warning means (38,39) connected to the outputs of the detector means are arranged to generate a failure signal when the detector means output signal changes; the wearable element may be a carbon electrical traction current collector or a brush for a dynamo-electric machine and the optical fibre may be attached to the wearable element in such manner that breakage of the wearable element would break the optical fibre and/or the optical fibre may be fixed to a given wear point for the wearable element such that wear of the element to the wear point will break the optical fibre.

FIG.6

## CONDITION INDICATOR SYSTEM FOR WEARABLE ELEMENTS

This invention relates to a condition indicator system for wearable elements such as crack or wear indication of a carbon electric traction current-collector, wear indication in a carbon brush for a dynamo electric machine or wear indication in brake pads or linings. The present invention particularly but not exclusively relates to a condition indicator system for use in regions of high strength electric or magnetic fields.

Failure indicators for the carbon electric traction current-collectors of a pantograph for a railway power car or locomotive have to operate in the environment of a 25 kv supply together with exposure above the roof of a power car and be fully insulated and isolated from and unaffected by such an environment. A known collector breakage system operates pneumatically and interfaces with an auto drop device that operates to drop the pantograph in the event of the collector being damaged, to prevent further damage to the overhead contact wire; see for example the collector breakage detector system described in GB PS 1374972 and GB PS 2107662A.

Known dynamo electric brush wear indicator systems depend upon an electrically conductive wire detector embedded in a brush and contacting the commutator or slip ring at a given wear point, the combination of an electrical detector system with electric supply through the brush to the commutator or slip ring of a dynamo electric machine in the harsh electromagnetic environment within such a machine is both difficult, complicated, expensive and liable to damage the commutator or slip ring; see for example the brush wear detector system described in US PS 4316186.

It is an object of the present invention to provide a condition indicator system for a wearable element that is insulated and isolated from the element and the environment in which the element is employed.

According to the present invention a condition indicator system for a wearable element comprising an optical fibre attached to or within a wearable element, means connected to one end of the optical fibre to transmit a light signal therethrough, means connected to the other element of the optical fibre to detect the transmitted light signal, the detector means being arranged to produce an output signal contingent upon the transmitted light signal and warning means connected to the output of the detector means arranged to generate a failure signal when the detector means output signal changes; indicating an absence of the light signal due to breakage of the optical fibre. Clearly, breakage of the optical fibre could be due to a fault condition for the wearable element to or in which the optical fibre is attached or to wear of the element to the point at which the optical fibre in the element has been exposed and broken.

Although it is known to use optical fibres for the transmission of data when electrical insulation and isolation are required and it is also known to use optical fibre as a sensor or transducer by modifying an optical parameter of the fibre, neither type of application is the same as the present invention wherein an optical fibre is used to detect failure of a wearable element. By their very nature, wearable elements have to be replaceable and consequently as inexpensive as possible. Equally, a condition indicator such as a breakage or wear indicator for wearable elements has to be inexpensive. Hitherto, fibre optic devices have tended to be expensive and intrinsically non-disposable and thus commercially not thought to be applicable to failure detection of a wearable element.

More particularly, in accordance with the present invention a fibre optic condition indicator system for a wearable element comprises:-
a loop of optical fibre attached to or within a wearable element;
a light signal generator;
means to optically couple one end of the fibre optic loop to the light signal generator;
a light signal detector, arranged to produce an output signal in response to reception of light at or above a given level of intensity;
means to optically couple the other end of the fibre optic loop to the light signal detector and,
warning means connected to the output of the light signal detector;
wherein the light signal is solely the presence or absence of light of given intensity and the optical coupling means are readily dis-connectable and are constructed to transmit sufficient light to maintain said level of intensity.

An indicator system in accordance with this particular aspect of the present invention is a minimum system in terms of complexity and components, so as to fulfill the cost requirement of a disposable system. Whereas it might be thought that the simplest and hence cheapest fibre optic condition indicator system would employ a single optical fibre attached to a wearable element, relying on the ability of an optical fibre to transmit light signals in either direction without interference of one signal with the other, we have discovered that the simplest effective indicator system requires an optical fibre loop with the apparent additional complexity of running parallel optical fibres from the generator and detector to the wearable element with separate optical couplers connecting each end of the loop to the signal generator and detector respectively.

Preferably, the optical fibre is a monofilament. In the application of the present invention to a breakage and/or wear indicator in a carbon electric traction current collector, the frequency of the light signal is chosen to best match the optimum transmissivity of the optical fibres; this being because the connection of the optical fibre loop to the rest of the indicator system and the installation of a collector on a pantograph requires several serial connections between the generator and the indicator and this inevitably results in loss of light signal intensity at each connection. In the application of the present invention to a dynamo electric brush wear indicator, the optical fibre is a monofilament of plastics material, the optical couplings are very simple snap-in connectors and a visible frequency is chosen for the light signal. This enables simple identification of a worn brush in a multiple brush installation. In response to a wear indication signal being output by the warning detector, which signal could be an alarm light or an audible alarm, a maintenance engineer merely has to disconnect each optical coupler in turn to look for presence or absence of light in the fibre; absence of light indicating a worn or otherwise damaged brush. By this means, no test equipment, such as a continuity meter need be used within the dynamo electric machine; which can be left running whilst the checks are made.

The above and other features of the present invention are illustrated, by way of example, in the drawings wherein:-

Fig. 1 is a schematic view of a pantograph including a breakage/wear indicator system in accordance with the present invention;

Figs. 2 and 3 are, respectively, an end elevation and an underplan of a carbon electric traction current collector to which an optical fibre loop is attached for breakage indication;

Figs. 4 and 5 are, respectively, an end elevation and an underplan of a carbon electric traction current collector in which an optical fibre loop is mounted for breakage and wear indication;

Fig. 6 is a schematic diagram of the condition indicator system of Fig. 1;

Fig. 7 is a schematic diagram of the electronic control unit of Fig. 6;

Fig. 8 is a schematic diagram of a brush wear indicator system for a dynamo electric machine in accordance with the present invention; and

Figs. 9 and 10 are, respectively, an end and a side elevation of an optical fibre loop mounted in a brush for wear indication.

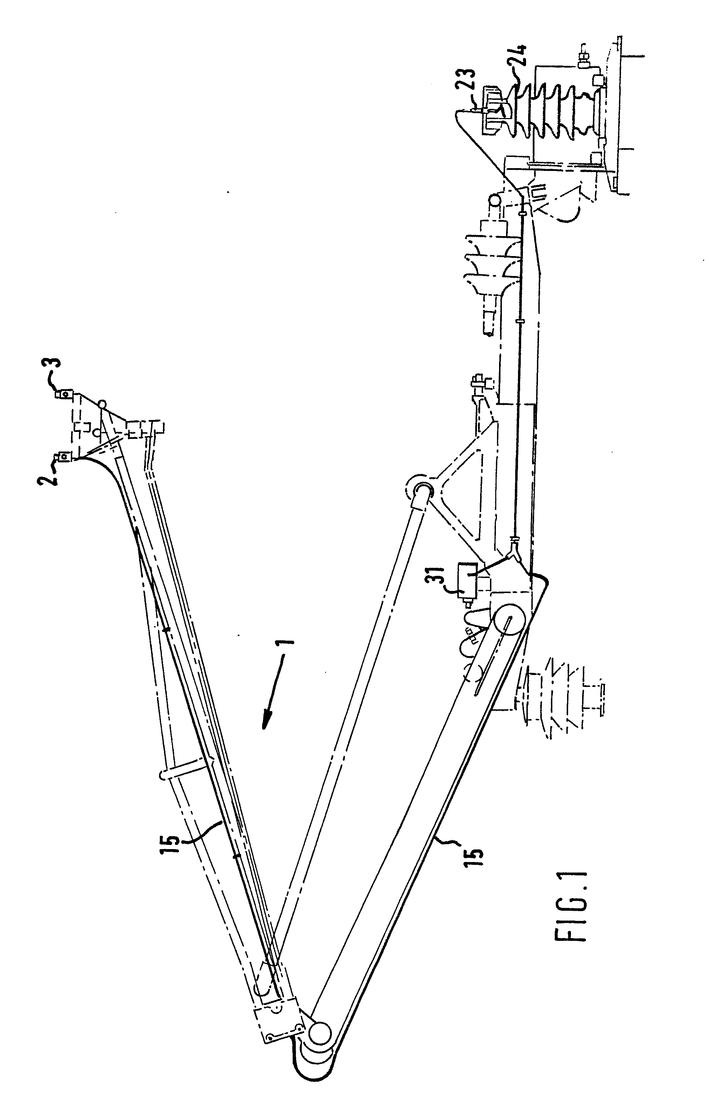

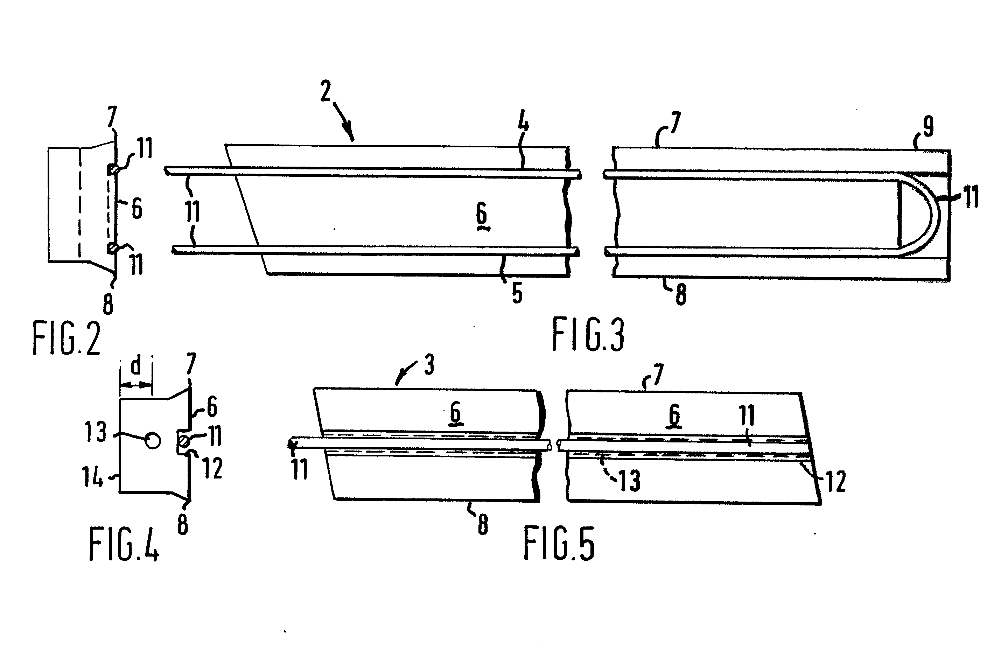

Fig. 1 shows a Brecknell-Willis pantograph 1 which has a British Rail Auto Drop Device (ADD) system which operates pneumatically to lower the pantograph 1 when either of a pair of carbon electric traction current collectors 2, 3 are damaged.

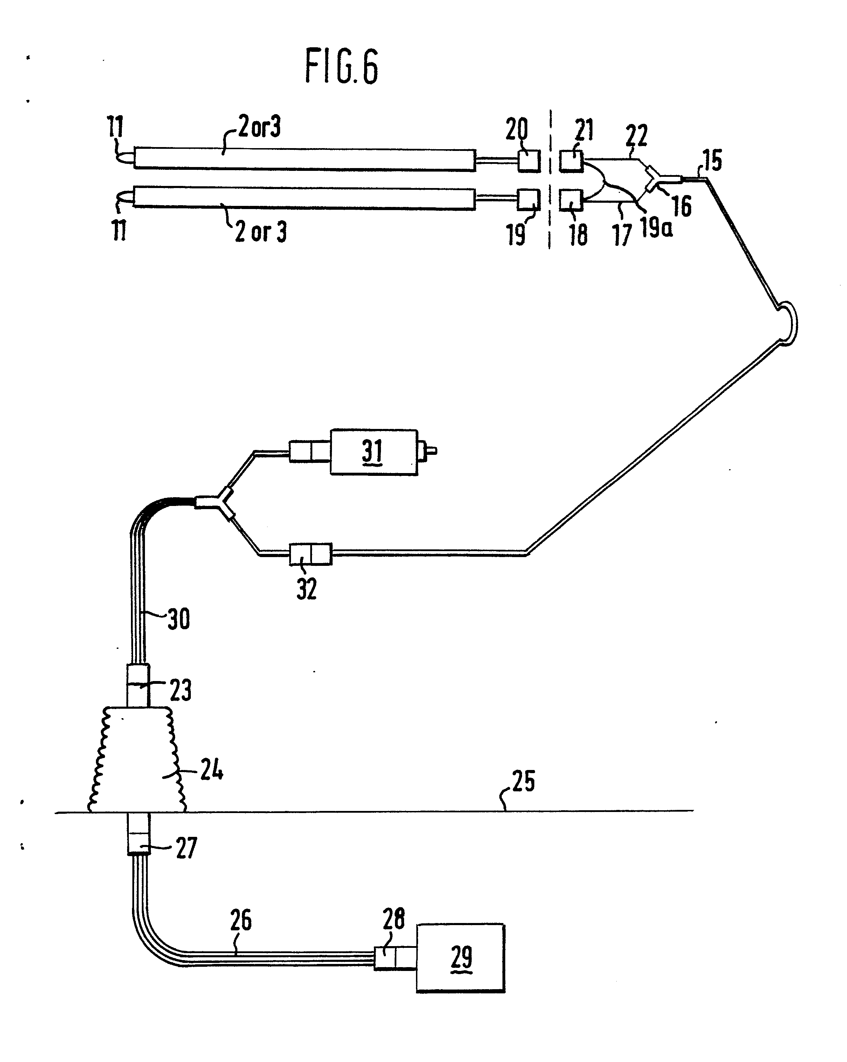

Figs. 2 and 3 illustrate one form of carbon collector 2 which has a pair of channels 4, 5 in the under-surface 6 of the collector, each channel running parallel to and inset from a side edge 7, 8 of the collector. One end 9 of the collector has a cross piece 10 from one channel to the other in the under-surface. In use, a loop of a monofilament of optical fibre, such as 200 micron silica fibre e.g. Ensigne Bickford Type HCR 2127, is bonded into the two channels in the collector and passes from one channel to the other via the cross piece 10. The bond between fibre and collector is strong and inflexible so that damage to the collector such as would fracture the carbon will also break the optical fibre and interrupt light transmission through the fibre.

Figs. 4 and 5 illustrate another form of carbon collector 3 which has a single channel 12 in the undersurface 6 of the collector, the channel running longitudinally and centrally between the side edges 7,8 of the collector. This form of collector 3 also has a longitudinal hole 13 at a depth "d" below the collector upper surface 14, the longitudinal hole being aligned above channel 12. The depth "d" is that at which the collector would become dangerously worn. A monofilament of optical fibre 11 is passed as a loop through hole 13 about one end of the collector and back along groove 12. Again the fibre is bonded to the collector. In this form fracture of the carbon will break the fibre; wear of the collector to the wear point at depth "d" will also break the fibre.

In the system illustrated by Figure 6, a pair of optical monofilaments 15 feed through a mechanical splitter 16 so that one fibre 17 of the fibre pair joins one connecting part 18 of an optical coupler, the other connecting part 19 of the coupler being joined to one arm of an optical fibre loop 11 fitted to one carbon collector (2 or 3). The other arm of this optical fibre loop 11 is optically coupled, via connector parts 19 and 18, a bridging optical fibre 19a and connector parts 20 and 21 of another optical coupler to be in series with an arm of an optical fibre loop 11 fitted to the second carbon collector (2 or 3). Finally, the other arm of the second optical fibre loop 11 is optically coupled, via connectors 20 and 21 to the other fibre 22 of the optical fibre pair 15.

Fibre pair 15 is then run along the arms of the pantograph 1 to optical connectors 23 on an insulator 24 mounted on the roof 25 of an electric power car. A further optical fibre pair 26 running from another optical connector 27 beneath the insulator 24 to an optical connector 28 to couple to the system's electronic control unit 29. In the example illustrated, a further optical fibre pair 30 runs from the electronic unit 29 to an optical height limit switch 31, the function of which is to prevent over extension of the pantograph arms. The presence of height limit switch 31 necessitates a further optical in line connector 32 in fibre pair 15. Thus the actual optical circuit comprises one fibre of pair 26 running from the electronic control unit 29, through insulator 24, up the pantograph arm, serially around both carbon collectors, down the other fibre of pair 15 along the pantograph arm, back through the insulator and then to the electronic control unit. Engineering requirements, including the replaceable carbon collectors, means that there are ten optical connections in the circuit loop, each connection resulting in a loss of light intensity. To minimise loss of light and to cope with the severe operating environment, the optical couplers are sturdy, well protected multi-way connectors, in-line connectors such as couplers 18 and 19, 20, 21 and 32 being fixed to the pantograph framework. A suitable optical connector is a Souriau Type 8 P with modified contacts to suit HCS cable.

Finally, the fibre pair 15 is protected by a loose sheathing.

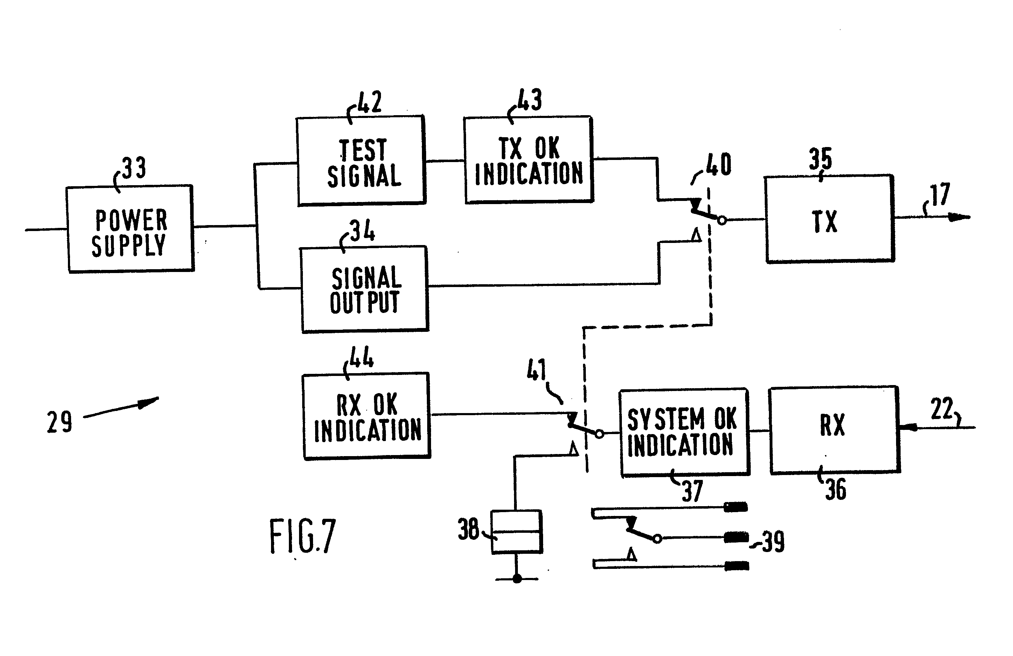

Fig. 7 is a block diagram of the electronic control unit 29 which is shown to comprise a power supply 33 and an associated electronic monitoring system, the system basically consisting of a signal generator 34 which supplies an electric logic level signal to an opto-electric transmitter 35, typically transmitting at 850 nm wavelength. The input end of the optical fibre 17 is optically coupled to the transmitter 35. The output end of the return optical fibre is optically coupled to an opto-electronic - schmitted receiver 36 to sense a lack of received light from fibre 22. A system indicator 37 and a relay 38 are serially connected to the output of receiver 36. The receiver outputs an electric logic level signal the state of which depends upon whether or not the intensity of received light is below a set threshold level. The system indicator 37 is arranged to indicate when light of sufficient intensity is being received and the relay is arranged to operate volt free contacts 39 (for remote indication etc. and/or local audible or visual alarms) when the intensity of received light falls below the set threshold level.

A test facility is also provided that allows isolation of remote alarms and monitoring of signals from the installed optical circuit. The principle involved is that of continuity throughout an optical fibre path and indication of a failure in the optical path producing a lack of continuity or an intensity of received light below that of a set threshold level. The test facility enables an operator, such as a motorman, to check that the indicator system is itself fault free. Ganged switches 40 and 41 switch the input to transmitter 35 from the signal generator 34 to a test signal generator 42 that outputs low frequency pulses, typically with an 0.5 second pulse repetition frequency, and an LED indicator 43 is connected between the test signal generator and the switch 42. Similarly, switch 41 switches the output from receiver 36 to a further LED indicator 44. Switching to test produces a 2 c.p.s. flashing light signal from the "transmission OK" indicator 43, a 2 c.p.s. flashing light signal from the "system OK" indicator 37 and a 2 c.p.s. flashing light signal from the "receiver OK" indicator 44.

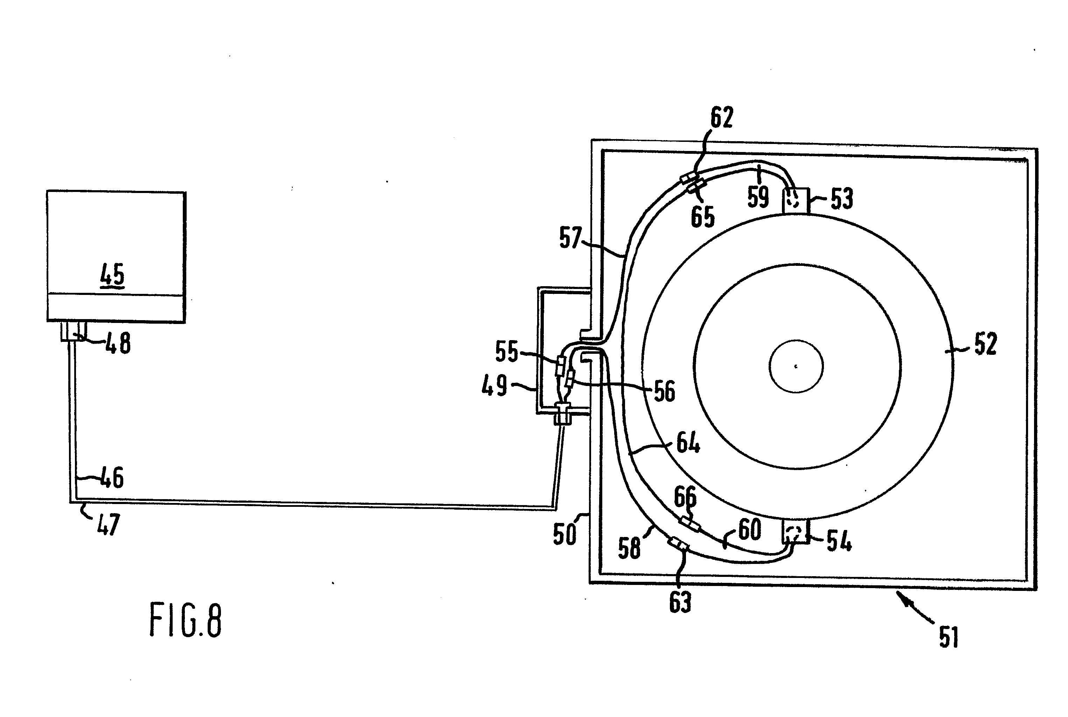

Fig. 8 shows a dynamo electric brush wear indicator system to comprise an electronic control unit 45, generally similar to the circuit 57 but without the test facility, using an LED as an alarm light instead of or as well as volt free relay contacts and with the transmitter emitting light at a visible frequency.

A pair of plastic monofilament optical fibres 46 and 47 are optically coupled at 48 to the transmitter and receiver of the electronic unit 45 and a lead to a bulkhead fitting 49 on the casing 50 of a dynamo electric machine 51 having a slip ring or commutator 52 and a pair of brushes 53 and 54. Within the bulkhead fitting 49, an in-line connector 55, 56 optically couples each fibre to inter-connecting fibre optic links 57 and 58 respectively, also being plastic monofilaments.

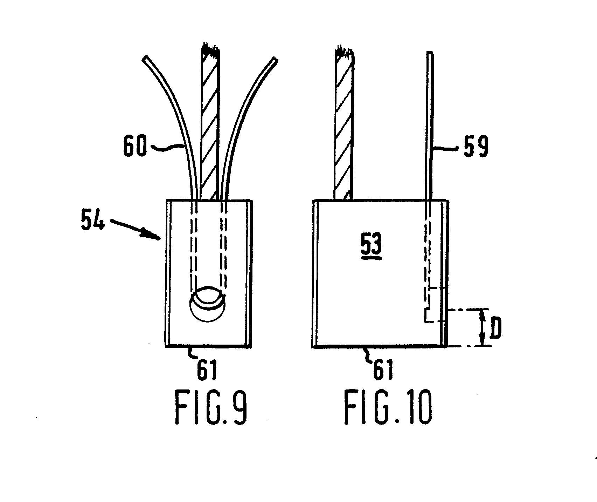

Each brush 53 or 54 has a loop of optical fibre 59 or 60, again a plastic monofilament embedded or otherwise passing down through or against a side face of the brush, with the fibre loop terminating at a given depth "D", the maximum safe wear depth, from the brushes contact face 61 (see Figs. 9 and 10). Wear of the brush to this wear depth will break the optical loop. Clearly, the optical fibres are intrinsically isolated and insulated from the brush and moreover, contact between the optical fibre and the slip ring or commutator will cause no or minimal damage.

Each brush loop 59, 60 has in-line connectors 62, 63 respectively optically coupling one arm of each loop 59, 60 to interconnecting loops 57 or 58. A further fibre optic link 64, terminating at either end in an in-line connector 65 or 66 optically couples the other arm of each of the loops 59, 60. By this means the wear sensing fibre optic loops 59 and 60 are optically serially connected between the transmitter and receiver of the electronic control unit 45. Up to four brush wear sensors may be serially optically coupled in this way, system losses permitting.

An alarm signal or operation of the alarm output relay indicates an interruption in the optical signal passing over the whole of the fibre optic loop, such as may be caused by wear breakage of the optical fibre in one of the brushes. Identification of the worn brush can be achieved by simply disconnecting each optical coupler in turn starting from the transmitter end looking for the absence of light in the appropriate fibre.

In dynamo-electric machines having large numbers of brushes, the brush wear indicator system is arranged with several fibre optic loops in parallel and brushes either singly connected in each loop or several brushes serially connected in any one loop.

## Claims

1. A condition indicator system for a wearable element comprising a conductor attached to or within a wearable element, means connected to one end of the conductor to transmit a signal therethrough, means connected to the other end of the conductor to detect the transmitter signal characterised in that the conductor is an optical fibre (11 or 59,60) and detector means (36) are arranged to produce an output signal contingent upon the transmitted light signal and warning means (38,39) are arranged to generate a failure signal when the detector means output signal changes.

2. A system as claimed in claim 1 and characterised in that it comprises:-
a loop (11 or 59,60) attached to or within a wearable element (2,3 or 53,54);
means (20,21 or 55,62,65) to optically couple one end (17 or 46) of the fibre optic loop to a light signal generator (35);
a light signal detector (36), arranged to produce an output signal in response to reception of light at or above a given level of intensity;
means (18,19 or 66, 63, 56) to optically couple the other end (22 or 47) of the fibre optic loop to the light signal detector; and,
warning means (38,39) connected to the output of the light signal detector;
wherein the light signal is solely the presence or absence of light of given intensity and the optical coupling means are readily disconnectable and are constructed to transmit sufficient light to maintain said level of intensity.

3. A system as claimed in claim 2 and characterised in that the wearable element is a carbon electrical traction current collector (2 or 3) and the optical fibre loop (11) is attached to the carbon collector in such manner that breakage of the carbon collector would break the optical fibre to interrupt transmission of a light signal through the optical fibre loop.

4. A system as claimed in claim 2 or claim 3 and characterised in that part of the optical fibre loop (11 or 59,60) is fixed at a given wear point (d or D) for the wearable element (3 or 53,54) such that wear of the element to the wear point will break the optical fibre to interrupt transmission of a light signal through the optical fibre loop.

5. A system as claimed in claim 4, wherein the wearable element is a brush (53,54) for a dynamo-electric machine (52), one or more brushes being serially connected in an optical fibre loop (46,57, 59,64,60,58,47) and further optical fibre loops being connected in parallel with said an optical fibre loop.

FIG.1

FIG.2

FIG.3

FIG.4

FIG.5

# FIG.6

FIG.7

0 269 307

FIG.8

0 269 307

**FIG.9** **FIG.10**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | DE-A-3 147 453 (ROGGE)<br>* Whole document *<br>--- | 1-4 | H 01 R 39/58<br>B 60 L 5/20 |
| X | PATENT ABSTRACTS OF JAPAN, vol. 8, no. 43 (M-279)[1480], 24th February 1984; & JP-A-58 198 103 (SUMITOMO DENKI KOGYO K.K.) 18-11-1983<br>* Abstract; figures *<br>--- | 1-4 | |
| E | EP-A-0 232 209 (FERRAZ)<br>* Whole document *<br>--- | 1,2,4,5 | |
| E | CH-A- 659 153 (BBC)<br>* Abstract; page 4, right-hand column, line 67 - page 5, last line; figure 14 *<br>--- | 1,2,4,5 | |
| D,A | GB-A-1 374 972 (MORGANITE CARBON)<br>--- | 1,3,4 | |
| D,A | EP-A-0 078 159 (MORGANITE CARBON)<br>--- | 1,3,4 | TECHNICAL FIELDS SEARCHED (Int. Cl.4) |
| D,A | US-A-4 316 186 (PURDY)<br>----- | 1,4,5 | B 60 L 3/00<br>B 60 L 5/00<br>H 01 R 39/00 |

The present search report has been drawn up for all claims

| Place of search | Date of completion of the search | Examiner |
|---|---|---|
| THE HAGUE | 11-02-1988 | RIEUTORT A.S. |